# EUROPÄISCHE PATENTSCHRIFT

(11) **EP 0 916 556 B1**
(45) Veröffentlichungstag und Bekanntmachung des Hinweises auf die Patenterteilung: **30.06.2004**
(21) Anmeldenummer: 98120515.6
(22) Anmeldetag: 29.10.1998
(51) Int. Cl.: B60R 22/24, F16C 27/02

(54) **Rollenumlenkung**
Return loop anchor with roller
Renvoi à rouleaux

(30) Priorität: 17.11.1997 DE 19750903
(43) Veröffentlichungstag der Anmeldung: 19.05.1999
(73) Patentinhaber: TAKATA-PETRI (Ulm) GmbH, 89081 Ulm (DE)
(72) Erfinder: Mautsch, Jürgen, 89250 Senden (DE); Wifling, Martin, 89134 Blaustein (DE); Kopetzky, Robert Dr., 89173 Lonsee (DE); Scholler, Oskar, 89269 Vöhringen (DE); Krammel, Horst, 85139 Wettstetten (DE)
(74) Vertreter: Baumgärtel, Gunnar, Dr.

(56) Entgegenhaltungen:
- EP-A- 0 941 899
- DE-A- 2 912 248
- DE-A- 19 757 171
- DE-U- 7 822 778
- FR-A- 2 423 235
- FR-A- 2 524 326
- GB-A- 2 189 377
- US-A- 3 829 184
- US-A- 3 841 772
- US-A- 5 415 433

## Beschreibung

Die Erfindung betrifft eine Rollenumlenkung für einen Sicherheitsgurt mit einer an einem Fahrzeugteil befestigbaren Halterung, die eine Umlenkrolle zwischen zwei Lagern lagert.

Es sind Rollenumlenkungen in verschiedenen Varianten bekannt. Derartige Rollenumlenkungen werden bei Kraftfahrzeugen verwendet, um den von einer Gurtrolle abgewickelten Gurt zum Fahrgast hin umzulenken. Dabei ist es oftmals nachteilig, daß die Lager hohen Belastungen ausgesetzt sind, wodurch diese vorzeitig verschleißen.

Aus der GB-A-2189377 ist eine Rollenumlenkung für eine Sicherheitsgurtanordnung bekannt, mit einer Halterung sowie einer Umlenkrolle, die in Lagern gelagert ist. Die Lager sind elastisch ausgestaltet.

Aus der DE-A-2912248 ist eine Gurtumlenkung für ein Sicherheitsgurtsystem bekannt, das ein federnd gelagertes Umlenkelement aufweist, wodurch die an dem Gurtband auftretenden Reibungskräfte reduziert sind.

Aus der DE-U-7822778 ist eine schwenkbewegliche Umlenkvorrichtung für mit Aufrollern versehene Sicherheitsgurte für Fahrzeuge bekannt, mit einem gegen Federwirkung in der Umlenkvorrichtung verlagerbaren Umlenkelement, das ab einer bestimmten Zugkraft in dem zum Fahrzeug-Insassen verlaufenden Gurtabschnitt gegen einen Anschlag zur Gurtklemmung bewegbar ist.

Aus der US-A-5415433 ist eine Sicherheitsgurtanordnung mit Rollenumlenkung bekannt, wobei die Rollenumlenkung eine auf einer biegsamen Welle gelagerte Umlenkrolle aufweist.

Es ist die Aufgabe der Erfindung, eine Rollenumlenkung der eingangs genannten Art mit verringertem Lagerverschleiß zu schaffen.

Die Lösung dieser Aufgabe erfolgt durch die Merkmale des Anspruchs 1.

Die erfindungsgemäße Rollenumlenkung weist zumindest ein, bevorzugt zwei federnd ausgebildete Lager auf, wodurch sichergestellt ist, daß auf den Sicherheitsgurt -und damit auch auf die Umlenkrolle bzw. die Lager - ausgeübte Kräfte zunächst durch das federnd ausgebildete Lager aufgenommen werden. Nach dem Auftreten großer Kräfte formt sich das Lager wieder in seine Ausgangsstellung zurück, ohne daß im Bereich des Lagers eine einseitige Belastung bzw. ein übermäßiger Verschleiß aufgetreten ist. Durch das erfindungsgemäße Lager läßt sich die Lebensdauer einer Rollenumlenkung bedeutend erhöhen, da die Fähigkeit des Lagers, einseitige Belastungen federnd aufzunehmen, einen vorzeitigen Verschleiß ausschließt.

Vorzugsweise weist die Umlenkrolle an ihren beiden Stirnseiten konkave oder abgestufte Ausnehmungen auf. Dadurch wird dem verbreiterten Rand des Lagers, der etwas in Richtung der Stirnseiten der Umlenkrolle vorsteht, genügend freier Raum gegenübergestellt, so daß eine Berührung oder ein Schleifen zwischen dem verbreiterten Rand des Lagers und der Stirnseite der Umlenkrolle ausgeschlossen sind.

Bevorzugt kann die Umlenkrolle eine Welle aufweisen, die sich an ihren beiden Enden verjüngt und die einen vorzugsweise um etwa ein Drittel des ursprünglichen Durchmessers verkleinerten Fortsatz bildet. Dadurch ist die Leichtgängigkeit der Rollenumlenkung gewährleistet, da die Welle das Lager an den Seiten nur gering (punktförmig) berührt und somit geringste Reibung und nahezu kein Abrieb auftreten.

Weitere vorteilhafte Ausführungsformen der Erfindung sind in der Beschreibung, den Zeichnungen, sowie den Unteransprüchen beschrieben.

Nach einer ersten vorteilhaften Ausführungsform kann das Lager eine hülsenartige Form aufweisen und an einem Ende offen und einem gegen- überliegenden Ende geschlossen sein, wodurch eine einfache Herstellung möglich ist. Das Lager kann durch ein Spritzguß- oder Extrusionsverfahren hergestellt werden.

Bei einer zweiten bevorzugten Ausführungsform der Erfindung kann das Lager am Außenumfang des offenen Endes verbreitert sein, wodurch das Lager durch den verbreiterten Rand in einer Durchbrechung der Halterung sicher gehalten werden kann und ein Hineinrutschen des Lagers in die Durchbrechung ausgeschlossen ist.

Bei einer dritten Ausführungsform kann das Lager an dem offenen Ende mehrere schlitzartig oder konische, in Axialrichtung verlaufende Ausnehmungen aufweisen, die vorzugsweise einander gegenüberliegend angeordnet sind. Dadurch ist das Lager am offenen Ende geringfügig komprimierbar und in Axialrichtung in eine Durchbrechung der Halterung eindrückbar, wodurch dessen Montage erleichtert ist.

Eine gute Federwirkung für eine Welle ergibt sich nach einer weiteren vorteilhaften Ausführungsform der Erfindung, wenn das Lager in eine Durchbrechung der Halterung eingebracht ist, die als Durchgangsbohrung ausgeführt ist. Das Lager besitzt in diesem Fall einen Freiraum, um in Axialrichtung zu federn.

Nach einer weiteren Ausbildung der Erfindung kann das Lager am geschlossenen Ende und im Inneren eine konvexe Lagerfläche aufweisen, die vorzugsweise an einer inneren Stirnseite konzentrisch angeordnet ist. Dadurch wird die Auflagefläche der Umlenkrolle bzw. deren Welle im Lager minimiert und durch die Punktberührung zwischen Wellenende und Lager können die Reibungskräfte erheblich verringert werden. Durch den damit verbundenen gering auftretenden Abrieb ist ferner eine hohe Lebensdauer des Lagers gewährleistet.

Nach einer bevorzugten Ausführungsform kann das Lager zylindrisch ausgebildet sein und zumindest zwei Bereiche mit unterschiedlichen Durchmessern aufweisen. Weiterhin kann das Lager auf der Seite des offenen Endes den größeren Durchmesser aufweisen und vorzugsweise nach etwa der Hälfte seiner Länge eine Verjüngung bilden. Auch kann das Lager zwischen den beiden Bereichen unterschiedlichen Durchmessers eine im Querschnitt mäanderförmige Ausbildung aufweisen, wobei durch diese spezielle Formgebung des Lagers eine gute Federwirkung erzielt wird. Hierbei kann sich die mäanderförmige Ausbildung zumindest teilweise innerhalb des Bereiches mit größerem Durchmesser erstrecken.

Vorteilhaft ist es, wenn das Lager mit der Außenfläche des Bereiches mit größerem Durchmesser an einer Wand der Durchbrechung der Halterung anliegt. Hierdurch ist eine gute Flächenberührung mit der Halterung möglich, wodurch eine hohe und gleichmäßige Kraftübertragung erfolgen kann.

Vorzugsweise kann das Lager aus einem Kunststoff, z.B. aus Polyoxyme- thylen bestehen, der bevorzugt eine Teflonverstärkung aufweist. Durch die hohe Kristallinität kann der Konstruktionswerkstoff Polyoxymethylen (POM) zu einem sehr harten, steifen, schlagzähen und abriebfesten Lager verarbeitet werden. Mit einer Glasfaserverstärkung lassen sich Festigkeit und Steifigkeit des Werkstoffes sowie durch Zulegierung von Elastomeren die Abriebfestigkeit weiter erhöhen.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: eine Rollenumlenkung in Explosionsdarstellung mit zugehörigen Bestandteilen;
- Fig. 2: eine teilweise geschnittene Darstellung einer weiteren Ausführungsform einer Rollenumlenkung in Vorderansicht;
- Fig. 3: einen Längsschnitt durch eine Umlenkrolle;
- Fig. 4: eine Seitenansicht einer Welle;
- Fig. 5: eine Ansicht auf die offene Stirnseite eines Lagers;
- Fig. 5a: eine Seitenansicht des Lagers von Fig. 5;
- Fig. 5b: einen Schnitt entlang der Schnittlinie A-A von Fig. 5;
- Fig. 6: eine geschnittene Seitenansicht einer weiteren Ausführungsform eines Lagers; und
- Fig. 7: eine geschnittene Seitenansicht einer weiteren Ausführungsform eines Lagers.

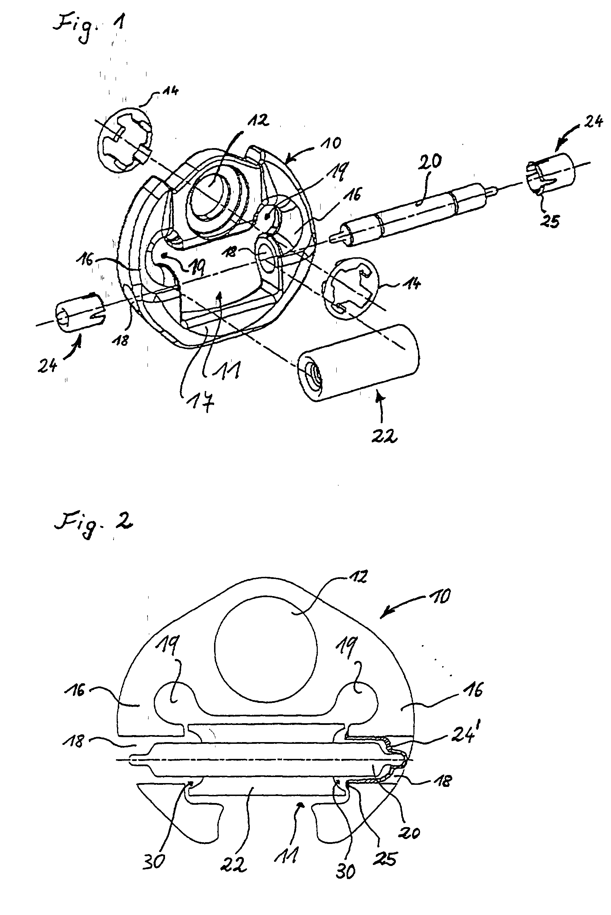

Fig. 1 zeigt eine Rollenumlenkung für einen Sicherheitsgurt in einer Explosionsdarstellung. Die Rollenumlenkung weist eine in Draufsicht etwa ovale Halterung 10 aus Metall auf, in der eine grundsätzlich rechteckige und nach oben offene Aussparung 11 für eine Umlenkrolle 22 vorgesehen ist. Oberhalb der Aussparung 11 ist in der Halterung 10 mittig eine kreisförmige Öffnung 12 zur Befestigung der Halterung 10 an einem Fahrzeug vorgesehen. In die Vorder- und Rückseite der Öffnung 12 ist jeweils ein Formteil 14 aus Kunststoff einsetzbar, um eine Geräuschreduzierung bei einem Verschwenken der Halterung 10 zu erzielen.

Die Halterung 10 ist oberhalb der Aussparung 12 konvex ausgebildet, wobei sich seitlich der Öffnung 12 jeweils schenkelartige, nach außen gewölbte Ausformungen 16 nach unten erstrecken, die unterhalb der Aussparung in einem Steg zusammenlaufen. Innerhalb der Aussparung 11 und im mittleren Bereich der Halterung 10 sind zwei kreiszylindrische Durchbrechungen in Form von Bohrungen 18 vorgesehen, die jeweils eine Ausformung 16 durchsetzen und koaxial zueinander sowie parallel zu dem Steg 17 verlaufen. Oberhalb der Bohrungen 18, die zur Aufnahme jeweils eines Lagers 24 dienen, und rechtwinklig zu diesen verlaufend sind in der Halterung 10 zwei kreisförmige Führungsöffnungen 19 vorgesehen, deren Ränder von der Mittelebene der Halterung 10 zur deren Vorder- und Rückseite konvex gekrümmt verlaufen und die sich zur Oberseite der Aussparung 11 hin öffnen. Diese Führungsöffnungen dienen zur reibungsarmen Führung des Gurtbandes, falls dieses schräg abgerollt oder aufgewikkelt wird. Die beiden Lager 24 lagern zwischen sich eine Welle 20, die mit der Umlenkrolle 22 verbunden ist.

Zur Montage der Rollenumlenkung wird die Welle 20 von einer Seite der Halterung 10 in eine Bohrung 18 von dort und bis zu der gegenüberliegenden Bohrung 18 des anderen Schenkels 16 eingeführt, wobei vorher in der Aussparung 11 zwischen den beiden Schenkeln 16 die Umlenkrolle 22 eingesetzt worden ist, die nach Einsetzen der Welle 20 von dieser durchsetzt ist. Anschließend wird von jeder Seite der Halterung 10 ein Lager 24 in die Durchgangsbohrung 18 eingeführt und dort verrastet. Die Welle 20 greift nun mit ihren beiden Enden jeweils in ein Lager 24 und trägt die Umlenkrolle 22, die fest auf der Welle 20 verrastet ist. Die Formteile 14 werden beidseitig in die Öffnung 12 eingedrückt. Durch die kreisförmige Öffnung 12 und die eingerasteten Formteile 14 erfolgt die Montage der Halterung 10 an einem Fahrzeugteil, insbesondere einer B-Säule eines Kraftfahrzeuges.

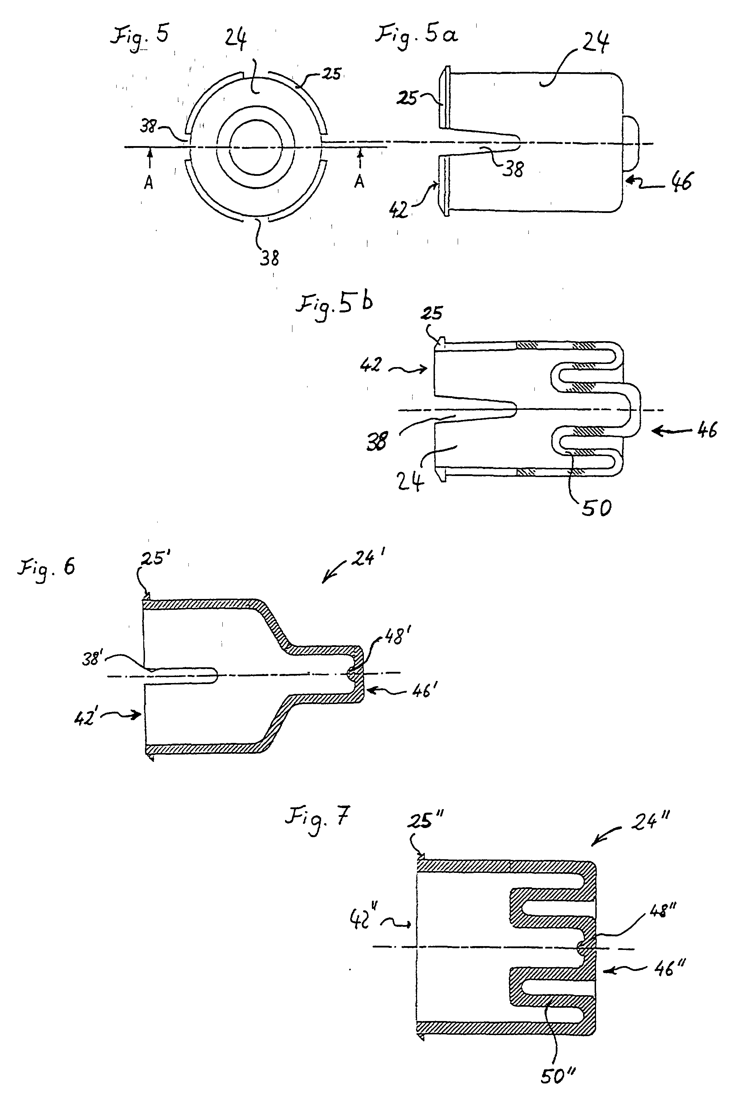

Fig. 2 zeigt eine teilweise geschnittene Ansicht einer weiteren Ausführungsform einer Rollenumlenkung, wobei für gleiche Teile gleiche Bezugszeichen verwendet sind. Die in Fig. 2 dargestellte Ausführungsform unterscheidet sich von der in Fig. 1 dargestellten im wesentlichen dadurch, daß die Ausformungen 16 unterhalb der rechteckigen Aussparung 11 nicht in einem Steg zusammenlaufen. Das in Fig. 2 dargestellte Lager 24 (der Übersichtlichkeit halber ist nur ein Lager 24 dargestellt) entspricht der in Fig. 6 dargestellten Ausführungsform, die nachfolgend noch näher beschrieben wird.

Wie in Fig. 2 gut zu erkennen ist, dienen die oberhalb und zu beiden Seiten der Umlenkrolle vorgesehenen kreisförmigen Führungsöffnungen, die sich in Richtung des oberen Randes der Umlenkrolle öffnen, zum Führen des Gurtbandes, wenn dieses (beispielsweise beim Befestigen eines Kindersitzes) schräg abgezogen wird. Wie ferner gut zu erkennen ist, weist die Umlenkrolle 22 an ihren beiden Stirnseiten jeweils konkave Ausnehmungen 30 auf, die eine Berührung zwischen der Umlenkrolle 22 und den Lagern 24 verhindern. Das Lager 24 befindet sich (wie auch bei der Ausführungsform von Fig. 1) bis zu einem verbreiterten Rand 25 in der Bohrung 18 und liegt dort mit der Außenfläche seines Bereiches mit größerem Durchmesser an der Innenwand der Bohrung 18 an.

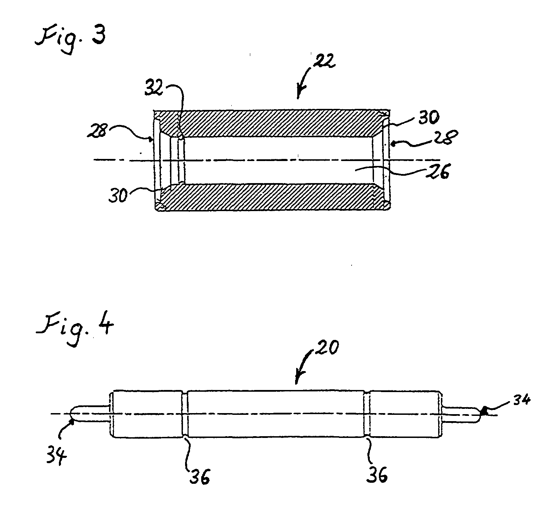

Fig. 3 zeigt einen Längsschnitt durch die in Fig. 1 dargestellte Umlenkrolle 22, die mit einer axialen Durchgangsbohrung 26 versehen ist. An den beiden Stirnseiten 28 der Umlenkrolle 22 sind gestufte Ausnehmungen 30 vorgesehen. Im Inneren der in Fig. 3 dargestellten Umlenkrolle 22 ist ein umlaufender Ringvorsprung 32 vorgesehen, der zum Aufrasten der Umlenkrolle 22 auf die Welle 20 dient.

Fig. 4 zeigt im Detail die in den Fig. 1 und 2 dargestellte Welle 20, deren Enden stiftartige Fortsätze mit konvex geformten Enden 34 aufweisen. Ferner weist die Welle 20 zwei umlaufende Ringnuten 36 auf, die zum Einrasten des Ringvorsprungs 32 der Umlenkrolle 22 dienen.

Fig. 5 zeigt eine vergrößerte Vorderansicht und Fig. 5a eine vergrößerte Seitenansicht des Lagers 24 von Fig. 1. In Fig. 5b ist ein Längsschnitt durch dieses Lager dargestellt.

Wie diese Figuren zeigen, weist das Lager 24 eine hülsenartige Form auf und ist an seinem (in den Fig. 5a und 5b) linken Ende 42 offen und an dem gegenüberliegenden Ende 46 geschlossen ausgebildet. Am Außenumfang des offenen Endes 42 besitzt das Lager 24 einen verbreiterten Rand 25, der eine Auflaufschräge besitzt, damit das Lager in die Bohrung 18 der Halterung 10 eingesetzt werden kann.

Am offenen Ende 42 des Lagers 24 sind vier schlitzartige, in Axialrichtung verlaufende Aussparungen 38 vorgesehen, wobei jeweils zwei Aussparungen gegenüberliegend angeordnet sind. Die Aussparungen 38 sind konisch ausgebildet und erstrecken sich etwa über ein Drittel des Lagers.

Das Lager 24 ist grundsätzlich zylindrisch ausgebildet und weist zwei Bereiche mit unterschiedlichen Durchmessern auf, wobei sich der Bereich mit größerem Durchmesser über nahezu die gesamte Länge des Lagers 24 erstreckt. Der Bereich mit kleinerem Durchmesser befindet sich zum überwiegenden Teil innerhalb des Bereiches mit größerem Durchmesser und ist über eine im Querschnitt mäanderförmige Ausbildung 50 mit dem Bereich größeren Durchmessers verbunden.

Fig. 6 zeigt eine weitere Ausführungsform eines Lagers 24', bei der ebenfalls ein Bereich mit größerem und ein Bereich mit kleinerem Durchmesser vorgesehen sind, wobei sich der Übergangsbereich konisch verjüngt und sich der Bereich mit kleinerem Durchmesser vollständig außerhalb des Bereiches mit größerem Durchmesser befindet, so daß im Querschnitt eine flaschenhalsartige Anordnung gegeben ist. An der Innenseite des geschlossenen Endes 46' ist eine konvexe Lagerfläche 48' angeordnet, die konzentrisch positioniert ist. Auch bei dieser Ausführungsform ist ein verbreiterter Rand 25' am offenen Ende 42' des Lagers 24' vorgesehen. Vom offenen Ende 42' verlaufen zwei Ausnehmungen 38', die im wesentlichen rechteckig ausgebildet sind, in Axialrichtung des Lagers. Auch bei dieser Ausführungsform beträgt der kleinere Durchmesser etwa 40% des größeren Durchmessers.
Fig. 7 zeigt die Querschnittsansicht einer weiteren Ausführungsform, die ähnlich zu der in den Fig. 5 bis 5b dargestellten ist. Bei dieser Ausführungsform ist das Lager 24" so ausgebildet, daß sich der Bereich mit geringerem Durchmesser vollständig innerhalb des Bereiches mit größerem Durchmesser befindet. An der inneren Stirnseite des geschlossenen Endes 46" ist mittig eine konvexe Lagerfläche 48" vorgesehen. Der Bereich mit geringerem Durchmesser erstreckt sich über etwa 50% der axialen Länge des Lagers 24".

### Bezugszeichenliste

- 10: Halterung
- 11: Aussparung
- 12: kreisförmige Öffnung
- 14: Formteil
- 16: Schenkel
- 17: Steg
- 18: Durchbrechung
- 19: Führungsöffnung
- 20: Welle
- 22: Umlenkrolle
- 24, 24', 24": Lager
- 25, 25', 25": verbreiterter Rand
- 26: Durchgangsbohrung
- 28: Stirnseite
- 30: Ausnehmung
- 32: Ringvorsprung
- 34: konvexes Ende
- 36: Ringnut
- 38, 38': Aussparung
- 42, 42', 42": offenes Ende
- 46, 46', 46": geschlossenes Ende
- 48', 48": konvexe Lagerfläche
- 50, 50": mäanderförmige Ausbildung

## Patentansprüche

1. Rollenumlenkung für einen Sicherheitsgurt mit einer an einem Fahrzeugteil befestigbaren Halterung (10), die eine Umlenkrolle (22) zwischen zwei Lagern (24, 24', 24") lagert, wobei mindestens ein Lager (24, 24', 24") federnd ausgebildet ist,
**dadurch gekennzeichnet,**
- **dass** die Umlenkrolle (22) an ihren beiden Stirnseiten (28) Ausnehmungen (30) aufweist, die vorzugsweise konkav oder gestuft ausgebildet sind, und
- **dass** die Umlenkrolle (22) eine durchgehende Welle (20) aufweist, die mit der Umlenkrolle verrastet ist und sich an ihren beiden Enden verjüngt und dabei einen, vorzugsweise um etwa ein Drittel des ursprünglichen Durchmessers, verkleinerten Fortsatz bildet.

2. Rollenumlenkung nach Anspruch 1, **dadurch**
**gekennzeichnet,**
**daß** das Lager (24, 24', 24") eine hülsenartige Form aufweist und an einem Ende (42, 42', 42") offen und an einem gegenüberliegenden Ende (46, 46', 46") geschlossen ist.

3. Rollenumlenkung nach Anspruch 2, **dadurch**
**gekennzeichnet,**
**daß** das Lager (24,24',24") am Außenumfang des offenen Endes (42) verbreitert ist und/ oder
**daß** das Lager (24, 24') an dem offenen Ende (42, 42') schlitzartige, in Axialrichtung verlaufende Aussparungen (38, 38') aufweist, wobei vorzugsweise zwei einander gegenüberliegend angeordnet sind.

4. Rollenumlenkung nach zumindest einem der vorhergehenden Ansprüche,
**dadurch gekennzeichnet,**
**daß** das Lager (24, 24', 24") in eine Durchbrechung der Halterung (10) eingebracht ist, die vorzugsweise als Durchgangsbohrung (18) ausgeführt ist.

5. Rollenumlenkung nach zumindest einem der vorhergehenden Ansprüche 2 bis4,**dadurch gekennzeichnet,**
**daß** das Lager (24', 24") am geschlossenen Ende (46', 46") und im Inneren eine konvexe Lagerfläche (48', 48") aufweist, die vorzugsweise an einer inneren Stirnseite konzentrisch angeordnet ist.

6. Rollenumlenkung nach zumindest einem der vorhergehenden Ansprüche,
**dadurch gekennzeichnet,**
**daß** die Umlenkrolle (22, 22', 22") eine Welle (20) mit konvex geformten Enden aufweist und/ oder
**daß** das Lager (24, 24', 24") zylindrisch ausgebildet ist und zumindest zwei Bereiche mit unterschiedlichen Durchmessern aufweist.

7. Rollenumlenkung nach Anspruch 6, **dadurch**
**gekennzeichnet,**
**daß** das Lager (24,24',24") auf der Seite des offenen Endes (42, 42', 42") den größeren Durchmesser aufweist und vorzugsweise nach etwa der Hälfte seiner Länge eine Verjüngung bildet und/oder
**daß** das Lager (24,24") zwischen den beiden Bereichen unterschiedlichen Durchmessers eine im Querschnitt mäanderförmige Ausbildung (50, 50") aufweist, die sich vorzugsweise zumindest teilweise innerhalb des Bereiches mit größerem Durchmesser erstreckt.

8. Rollenumlenkung nach zumindest einem der vorhergehenden Anspruche 4 bis7,**dadurch gekennzeichnet,**
**daß** das Lager (24,24', 24") mit der Außenfläche des Bereiches mit größerem Durchmesser an einer Wand der Durchbrechung (18) anliegt.

9. Rollenumlenkung nach zumindest einem der vorhergehenden Anspruche,
**dadurch gekennzeichnet,**
**daß** das Lager (24, 24', 24") aus einem Kunststoff, vorzugsweise aus Polyoxymethylen (POM) besteht, der bevorzugt eine Teflonverstärkung aufweist.

## Claims

1. Roller-type deflecting means for a seat belt, having a mount (10) which can be fastened onto a vehicle part and supports a deflection roller (22) between two bearings (24, 24', 24"), at least one bearing (24, 24', 24") being of resilient design,
**characterized**
- **in that** the deflection roller (22) has, on its two end sides (28), recesses (30) which are preferably of concave or stepped design, and
- **in that** the deflection roller (22) has a continuous shaft (20) which is latched to the deflection roller and tapers at its two ends and, in the process, forms an extension which is reduced in size preferably by approximately one third of the original diameter.

2. Roller-type deflecting means according to Claim 1, **characterized in that** the bearing (24, 24', 24") has a sleeve-like shape and is open at one end (42, 42', 42") and is closed at an opposite end (46, 46', 46").

3. Roller-type deflecting means according to Claim 2, **characterized in that** the bearing (24, 24', 24") is enlarged at the outer circumference of the open end (42), and/or **in that** the bearing (24, 24') has, at the open end (42, 42'), slot-like cutouts (38, 38') running in the axial direction, with preferably two being arranged opposite each other.

4. Roller-type deflecting means according to at least one of the preceding claims, **characterized in that** the bearing (24, 24', 24") is placed into an aperture of the mount (10), which aperture is preferably designed as a through-hole (18).

5. Roller-type deflecting means according to at least one of the preceding Claims 2 to 4, **characterized in that** the bearing (24', 24") has, at the closed end (46', 46") and in the interior, a convex bearing surface (48', 48") which is preferably arranged concentrically on an inner end side.

6. Roller-type deflecting means according to at least one of the preceding claims, **characterized in that** the deflection roller (22, 22', 22") has a shaft (20) having convexly shaped ends, and/or **in that** the bearing (24, 24', 24") is of cylindrical design and has at least two regions with different diameters.

7. Roller-type deflecting means according to Claim 6, **characterized in that** the bearing (24, 24', 24") has the larger diameter on the side of the open end (42, 42', 42") and forms a taper, preferably after approximately half of its length, and/or **in that** the bearing (24, 24') has, between the two regions of different diameter, a formation (50, 50") which is meandering in cross section and preferably extends at least partially within the region of larger diameter.

8. Roller-type deflecting means according to at least one of the preceding Claims 4 to 7, **characterized in that** the bearing (24, 24', 24") bears with the outer surface of the region of larger diameter against a wall of the aperture (18).

9. Roller-type deflecting means according to at least one of the preceding claims, **characterized in that** the bearing (24, 24', 24") consists of a plastic material, preferably of polyoxymethylene (POM), which preferably has a Teflon reinforcement.

## Revendications

1. Renvoi à rouleaux pour une ceinture de sécurité avec une fixation (10) pouvant être fixée à une partie du véhicule, qui supporte un rouleau de renvoi (22) entre deux paliers (24, 24', 24"), au moins un palier (24, 24', 24") étant réalisé à ressort,
**caractérisé en ce que**
- le rouleau de renvoi (22) présente sur ses deux côtés frontaux (28) des évidements (30) qui sont de préférence concaves ou étagés,
et
- **en ce que** le rouleau de renvoi (22) présente un arbre traversant (20) qui est encliqueté avec le rouleau de renvoi et qui se rétrécit à ses deux extrémités et forme alors une saillie réduite de préférence d'environ un tiers du diamètre initial.

2. Renvoi à rouleaux selon la revendication 1,
**caractérisé en ce que**
le palier (24, 24', 24") présente une forme de type manchon et est ouvert à une extrémité (42, 42', 42") et fermé à une extrémité opposée (46, 46', 46").

3. Renvoi à rouleaux selon la revendication 2,
**caractérisé en ce que**
le palier (24, 24', 24") est élargi au niveau de la périphérie extérieure de l'extrémité ouverte (42) et/ou
**en ce que** le palier (24, 24') présente au niveau de l'extrémité ouverte (42, 42') des évidements (38, 38') de type fente, s'étendant dans la direction axiale, de préférence deux d'entre eux étant disposés en regard l'un de l'autre.

4. Renvoi à rouleaux selon au moins l'une quelconque des revendications précédentes,
**caractérisé en ce que**
le palier (24, 24', 24") est monté dans un perçage de la fixation (10) qui est de préférence réalisé sous forme d'alésage traversant (18).

5. Renvoi à rouleaux selon au moins l'une quelconque des revendications 2 à 4, **caractérisé en ce que**
le palier (24', 24") présente à l'extrémité fermée (46', 46") et à l'intérieur une face de palier convexe (48', 48") qui est de préférence disposée concentriquement sur un côté frontal interne.

6. Renvoi à rouleaux selon au moins l'une quelconque des revendications précédentes,
**caractérisé en ce que**
le rouleau de renvoi (22, 22', 22") présente un arbre (20) avec des extrémités de forme convexe et/ou
**en ce que** le palier (24, 24', 24") est cylindrique et présente au moins deux régions de diamètres différents.

7. Renvoi à rouleaux selon la revendication 6,
**caractérisé en ce que**
le palier (24, 24', 24") présente le plus grand diamètre du côté de l'extrémité ouverte (42, 42', 42") et de préférence forme un rétrécissement après environ la moitié de sa longueur et/ou
**en ce que** le palier (24, 24") présente, entre les deux régions de diamètres différents, une réalisation de section transversale en forme de méandres (50, 50") qui s'étend de préférence au moins partiellement à l'intérieur de la région de plus grand diamètre.

8. Renvoi à rouleaux selon au moins l'une quelconque des revendications 4 à 7, **caractérisé en ce que**
le palier (24, 24', 24") s'applique avec la face extérieure de la région de plus grand diamètre contre une paroi du perçage (18).

9. Renvoi à rouleaux selon au moins l'une quelconque des revendications précédentes,
**caractérisé en ce que**
le palier (24, 24', 24") se compose d'un plastique, de préférence de polyoxyméthylène (POM), qui présente de préférence un renforcement au téflon.
